(19) Europäisches Patentamt / European Patent Office / Office européen des brevets

(11) **EP 4 733 714 A1**

(12) **DEMANDE DE BREVET EUROPEEN**

(43) Date de publication:
**29.04.2026 Bulletin 2026/18**

(21) Numéro de dépôt: **25210280.1**

(22) Date de dépôt: **22.10.2025**

(51) Classification Internationale des Brevets (IPC):
**G01B 11/22** (2006.01)     **G01B 11/24** (2006.01)
**G01N 21/88** (2006.01)     **G06T 7/62** (2017.01)

(52) Classification Coopérative des Brevets (CPC):
**G01B 11/22; G01B 11/24; G01N 21/88; G06T 7/62;**
G06T 2207/10028; G06T 2207/30156

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**GE KH LA MA MD TN**

(30) Priorité: **25.10.2024 FR 2411667**

(71) Demandeur: **AIRBUS OPERATIONS (S.A.S.)**
**31060 Toulouse (FR)**

(72) Inventeurs:
• **MARTICOU, Henri**
 **31060 TOULOUSE (FR)**
• **VIARDS, Raphaël**
 **31060 TOULOUSE (FR)**

(74) Mandataire: **Cabinet Le Guen Maillet**
 **3, impasse de la Vigie**
 **CS 71840**
 **35418 Saint-Malo Cedex (FR)**

(54) **PROCEDE AMELIORE DE DETERMINATION AUTOMATISEE DE LA PROFONDEUR D'UN DEFAUT DETECTE A LA SURFACE D'UN OBJET, ET SYSTEME CONFIGURE POUR EXECUTER LE PROCEDE**

(57) L'invention concerne un procédé d'inspection automatisée d'une surface (AS) d'un objet solide telle que, par exemple, une surface (AS) d'aéronef (100) ; le procédé utilisant une étape de détection d'un défaut (D) de la dite surface (AS) représentée sous la forme d'une image (S) de type carte de profondeurs (S), des analyses de profils de profondeur (DPi) successifs visant à déterminer une profondeur (Pi) pour chacun desdits profils de profondeur (DPi), puis une détermination d'une profondeur (P) « finale » d'un défaut à partir de l'ensemble des profondeurs (Pi) desdits profils. L'invention concerne en outre un système (1) configuré pour exécuter le procédé.

Avantageusement il est ainsi possible de déterminer de façon automatisée la profondeur des défauts de planéité dans une surface (AS) d'aéronef (100) avec un niveau de précision non encore atteint.

[Fig. 5]

EP 4 733 714 A1

**Description**

DOMAINE TECHNIQUE

La présente invention concerne un procédé amélioré de détermination automatisée de la profondeur d'un défaut à la surface d'un objet, laquelle surface est, par exemple, une surface d'un élément d'aéronef ; le défaut étant détecté à partir d'informations précédemment obtenues depuis un dispositif d'inspection de surfaces auxquelles un procédé de détection est appliqué. L'invention concerne en outre un système configuré pour exécuter un tel procédé.

ÉTAT DE LA TECHNIQUE ANTÉRIEURE

Les méthodes automatisées d'inspection et de contrôle de qualité utilisées dans l'industrie amènent souvent un gain de temps important dans des étapes de fabrication de produits. Cela est particulièrement avantageux pour des équipements dont la fabrication requiert un nombre important d'éléments et d'étapes de fabrication, pour laquelle un accroissement de la cadence est souvent recherché. L'inspection de surfaces d'un aéronef lors d'opérations de fabrication ou de maintenance de cet aéronef est courante et il existe un besoin d'obtenir des moyens automatisés d'inspection et de détection d'éventuels défauts de surfaces, permettant d'obtenir un niveau de perception et de détection au moins aussi élevé que celui de l'œil humain, voire encore plus élevé, pour détecter des défauts de surfaces de très petites dimensions lors d'opérations de fabrication ou de maintenance.

Bien que les outils et méthodes de détection disponibles permettent de détecter de façon fiable des défauts à la surface d'objets, des valeurs mesurées de la profondeur d'un défaut de surface varient souvent substantiellement en fonction de l'outil ou de la méthode utilisé. En outre, lorsqu'un défaut de surface est détecté à côté d'un élément agencé en surface et présent dans le voisinage du défaut, tel que par exemple un rivet, la présence de l'élément présentant une variation de surface rend plus complexe une détermination de la profondeur du défaut.

La situation peut être améliorée.

EXPOSÉ DE L'INVENTION

Un objet de la présente invention est d'accroître la précision de mesure de la profondeur d'un défaut de surface détecté grâce à des moyens d'inspection automatisée de surfaces d'objets, par exemple des surfaces d'aéronef, avec des moyens de détection aptes à détecter un défaut de surface.

A cet effet, il est proposé un procédé de détermination d'une profondeur d'un défaut de surface d'un objet, ladite surface étant instanciée numériquement sous la forme d'une carte de distances entre une surface réelle mesurée dudit objet et un capteur d'un système d'inspection de surfaces configuré pour obtenir ladite surface instanciée numériquement par une opération de scrutation de ladite surface réelle, ledit procédé comprenant une détection dudit défaut dans ladite surface, par délimitation d'une portion dite « zone de défaut » de ladite surface instanciée numériquement, ledit procédé étant caractérisé en ce qu'il comprend en outre :

- (i) une détermination d'un centre dudit défaut,
- (ii) une détermination d'une pluralité de profils de profondeur du défaut, chacun desdits profils de profondeur étant respectivement établi suivant un parcours de ladite zone de défaut de la surface instanciée numériquement selon une trajectoire rectiligne prédéterminée passant par ledit centre, chacun desdits profils de profondeur étant en outre déterminé en référence à une trajectoire différente de la trajectoire déterminée pour les autres profils parmi ladite pluralité de profils,
- (iii) une détermination d'une profondeur maximale et d'un indice de confiance pour chacun desdits profils de profondeur déterminés, puis,
- (iv) une détermination de ladite profondeur dudit défaut de surface à partir desdites profondeurs maximales déterminées et desdits indices de confiance déterminés en référence à chacun desdits profils de profondeur.

Avantageusement et grâce au procédé proposé, il est possible d'améliorer la caractérisation d'un défaut de surface d'un objet et d'entreprendre, le cas échéant, des actions correctives. Par exemple, il est possible d'organiser de façon optimisée des opérations de maintenance ou des adaptations des méthodes de fabrication de l'objet présentant un défaut en fonction de la profondeur du défaut, cette dernière pouvant être déterminée avec un niveau accru de précision.

Le procédé selon l'invention peut en outre présenter les caractéristiques additionnelles suivantes, considérées seules ou en combinaisons :

- Une détermination de la profondeur maximale d'un profil de profondeur selon le procédé comprend une opération d'interpolation dans le profil de profondeur concerné.

- La détermination de la profondeur du défaut de surface à partir des profondeurs maximales déterminées chacune en référence à un profil comprend un calcul de médiane pondérée.
- Le procédé comprend en outre une étape de notification de la présence dudit défaut détecté dans ladite surface.

Un autre objet de l'invention est un procédé de fabrication d'un élément d'aéronef comprenant un procédé de détermination de la profondeur d'un défaut tel que précédemment décrit, et une étape de modification de la surface présentant le défaut à partir d'au moins une information représentative du défaut.

L'invention a également pour objet un système de détermination d'une profondeur d'un défaut de surface d'un objet, ladite surface étant instanciée numériquement sous la forme d'une carte de distances entre une surface réelle mesurée dudit objet et un capteur d'un système d'inspection de surfaces configuré pour obtenir ladite surface instanciée numériquement par une opération de scrutation de ladite surface réelle, ledit système comprenant une circuiterie électronique configurée pour opérer une détection dudit défaut dans ladite surface, par délimitation d'une portion dite « zone de défaut » de ladite surface instanciée numériquement, ledit système comprenant en outre une circuiterie électronique configurée pour opérer :

- (i) une détermination d'un centre dudit défaut,
- (ii) une détermination d'une pluralité de profils de profondeur du défaut, chacun desdits profils de profondeur étant respectivement établi suivant un parcours de ladite zone de défaut de la surface instanciée numériquement selon une trajectoire rectiligne prédéterminée passant par ledit centre, chacun desdits profils de profondeur étant en outre déterminé en référence à une trajectoire différente de la trajectoire déterminée pour les autres profils parmi ladite pluralité de profils,
- (iii) une détermination d'une profondeur maximale et d'un indice de confiance pour chacun desdits profils de profondeur déterminés, puis,
- (iv) une détermination de ladite profondeur dudit défaut de surface à partir desdites profondeurs maximales déterminées et desdits indices de confiance déterminés en référence à chacun desdits profils de profondeur.

Le système selon l'invention peut présenter en outre les caractéristiques additionnelles suivantes, considérées seules ou en combinaisons :

- Le système comprend une circuiterie électronique configurée pour opérer une détermination d'une profondeur maximale d'un profil de profondeur prédéterminé laquelle détermination comprend une opération d'interpolation dans un profil de profondeur déterminé.
- Le système comprend une circuiterie électronique configurée pour réaliser une détermination de la profondeur du défaut de surface à partir des profondeurs maximales déterminées chacune en référence à un profil, la détermination de la profondeur du défaut de surface comprenant un calcul de médiane pondérée.
- Le système comprend une circuiterie électronique configurée pour opérer une notification de la présence du défaut détecté dans la surface inspectée et analysée.

Un autre objet de l'invention est un produit programme d'ordinateur comprenant des instructions de codes de programme pour exécuter des étapes d'un procédé tel que précédemment décrit lorsque ces instructions sont exécutées par un processeur d'un système de détermination d'une profondeur d'un défaut de surface d'un objet solide.

Enfin, un objet de l'invention est un dispositif de stockage comprenant un produit programme d'ordinateur tel que précité.

BRÈVE DESCRIPTION DES DESSINS

[Fig. 1] illustre schématiquement un système d'inspection automatisée de l'état d'une surface d'un objet solide selon un mode de réalisation ;
[Fig. 2] illustre schématiquement un aéronef présentant des surfaces pouvant être inspectées en utilisant le système représenté sur la Fig. 1 ;
[Fig. 3] est une représentation schématique d'un ensemble d'informations représentatives de la surface d'un objet solide et prenant la forme d'une image de type carte de profondeurs, (ou de distances) utilisées comme données d'entrée du système d'inspection automatisée déjà représenté sur la Fig. 1 ;
[Fig. 4] est un ordinogramme illustrant des étapes d'un procédé de détermination automatisée de la profondeur d'un défaut de surface d'un objet solide, exécuté dans le système d'inspection automatisée déjà représenté sur la Fig. 1, selon un mode de réalisation ;

[Fig. 5] illustre des détails d'une étape globale de détermination de la profondeur d'un défaut décrite en relation avec la Fig. 4 ;

[Fig. 6] est un diagramme illustrant un exemple d'architecture d'une unité de traitement de données comprenant une circuiterie électronique configurée pour exécuter le procédé décrit en relation avec la Fig. 4, selon un mode de réalisation ;

[Fig. 7] illustre schématiquement un défaut dans une zone de détection de défaut d'une surface inspectée instanciée numériquement, selon un mode de réalisation ;

[Fig. 8] illustre un profil de profondeur d'un défaut selon une trajectoire déterminée et selon un mode de réalisation ;

[Fig. 9] illustre une généralisation d'un profil de profondeur tel que déjà représenté sur la Fig. 8 ; et,

[Fig. 10] illustre un cas particulier de profil de profondeur d'un défaut, selon un mode de réalisation, de nature à occasionner un traitement spécifique de ce profil.

EXPOSÉ DÉTAILLÉ DE MODES DE RÉALISATION

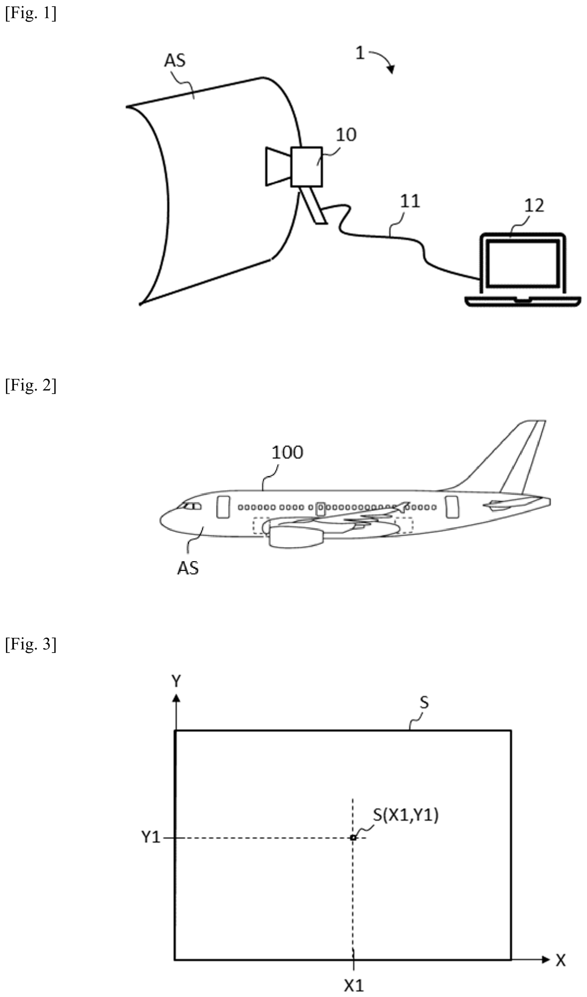

La **Fig. 1** représente un système d'inspection automatisée 1 de l'état d'une surface AS d'un objet solide selon un mode de réalisation. Le système d'inspection automatisée 1 comprend un dispositif capteur 10 relié à une unité de traitement 12 via un lien de communication 11. Selon un mode de réalisation, le lien de communication 11 est filaire. Selon une variante de réalisation, le lien de communication 11 est configuré pour opérer une communication sans fil. Selon un mode de réalisation, le dispositif capteur 10 est une caméra ou un scanner opérant comme un capteur de distances configuré pour délivrer un ensemble de données de type « nuage 3D de points », ces données étant alors représentatives de la surface AS inspectée, ou plus précisément de l'état de surface de la surface AS inspectée. Le dispositif capteur de distances 10 opère des mesures de distances entre un point de référence qu'il inclut et une pluralité de points d'une surface d'un objet solide. Selon un mode de réalisation, chacun des points du nuage 3D de points est instancié sous la forme d'un couple de coordonnées x et y considérées en combinaison d'une valeur de distance S (x, y) par rapport à la caméra positionnée en référence à la normale au plan tangent à la surface inspectée AS dans le champ de mesure du capteur 10 (caméra ou scanner, par exemple). Pour chaque zone inspectée de la surface AS, un nuage 3D de points S (x, y) peut être transmis par le dispositif capteur 10 à l'unité de traitement 12 via le lien de communication 11. Ce nuage 3D de points S (x, y) constitue des premières informations représentatives de la forme de la surface AS inspectée (encore appelée ici « état de surface ») de la surface AS inspectée. En d'autres termes, ce nuage 3D de points S (x, y) constitue une carte de profondeurs (ou de distances) déterminant un ensemble de distances pour des points de la surface AS observés et inspectés dans le champ de mesure du dispositif capteur 10. L'unité de traitement 12 est configurée pour opérer des traitements successifs à partir de ces premières informations, aux fins de caractériser des défauts de surface présents dans la surface inspectée AS, tels que des enfoncements et des reliefs de formes et de dimensions variées (impacts, rayures, embossages, creux, etc.).

La **Fig. 2** illustre un exemple de surface inspectée AS d'un aéronef 100. Selon l'exemple décrit en relation avec la Fig. 2, la surface AS est une surface d'un élément de fuselage de l'aéronef 100. Bien évidemment, cet exemple est non limitatif et le système d'inspection automatisée 1 peut être utile à l'inspection de nombreuses surfaces d'un aéronef, dont notamment le fuselage et la voilure.

La **Fig. 3** illustre schématiquement une structure de données comprenant les premières informations précitées, mémorisées sous la forme d'une matrice S de valeurs dont chacun des éléments S (X, Y) est déterminé et mémorisé en référence à des coordonnées X et Y d'un plan. Par exemple, un élément S (X1, Y1) est représentatif de la distance entre le dispositif capteur 10 et un point de la surface AS dont la position est déterminée dans l'espace par les coordonnées X1 et Y1. Selon un mode de réalisation, la matrice de valeurs S constitue en outre une image des distances respectivement mesurées pour les différents points de la matrice S. Par exemple, plus un point de l'image est lumineux, plus la distance est grande entre le point correspondant de la surface inspectée AS et le capteur de mesure de distances du dispositif capteur 10, ou inversement. Les termes « point correspondant de la surface inspectée » désignent ici un point de la surface AS inspectée dont un point considéré de l'image (ou matrice) S est représentatif. Ainsi la structuration des premières informations obtenues constitue une transformation 3D vers 2D de la surface AS inspectée en une image S qui peut subir des traitements grâce à l'unité de traitement 12 aux fins de détecter la présence de défauts éventuels dans la surface inspectée AS.

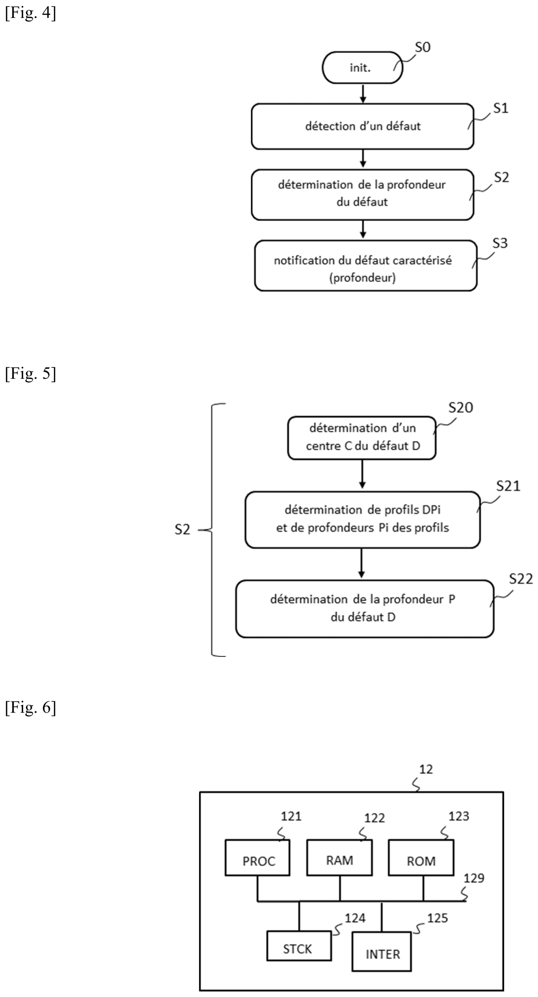

La **Fig. 4** décrit des étapes d'un procédé de détermination de la profondeur d'un défaut de surface, exécuté par et dans l'unité de traitement 12 du système d'inspection automatisée 1, selon un mode de réalisation particulier et non limitatif de l'invention.

Une étape **S0** est une étape initiale (ou d'initialisation) au terme de laquelle tous les circuits et éléments du système d'inspection automatisée 1 sont sous-tension, normalement alimentés en énergie, configurés et opérationnels. En particulier, le dispositif capteur 10 est positionné sur un support ou par un opérateur face à une zone de la surface inspectée AS et des premières informations représentatives de l'état de surface de la surface AS inspectée sont transmises par le dispositif capteur 10 à l'unité de traitement 12. Ces premières informations constituent une « matrice-image » de partie de la surface AS analysée et forment une instance numérique de la surface AS, appelée ici surface S ou matrice-image S.

Lors d'une étape **S1** de détection de défaut, une opération de floutage (ou lissage) de la matrice (ou image) S est d'abord opérée sur la matrice-image instanciée par les premières informations obtenues par l'unité de traitement 12. Selon un mode de réalisation, l'opération de floutage opère un floutage avec un rayon de floutage compris entre 5 mm et 15 mm, préférentiellement selon un rayon de floutage de 10 mm. La matrice ou image résultante de ce floutage constitue de nouvelles informations, représentatives de la surface AS, sous la forme d'une matrice-image floutée. Ensuite, une triple dérivation de la matrice-image floutée appliquée aux informations issues du floutage est opérée. Les termes « triple dérivation » désignent ici trois opérations successives de dérivation appliquées à la matrice-image représentative de la surface inspectée AS (ou d'une zone ou portion de cette surface), en utilisant respectivement trois opérateurs de dérivation différents (d'abord un gradient, puis une matrice Hessienne, et enfin un opérateur de dérivation spécifique).

Selon un mode de réalisation, la triple dérivation précitée qui comprend trois opérations de dérivation successives en utilisant respectivement trois opérateurs de dérivation est décomposée comme ci-après :

Une première dérivation (de la triple dérivation) opère un calcul de gradient de la surface inspectée, lequel s'exprime sous la forme :

$$\nabla s(x,y) = \begin{bmatrix} \frac{\partial s}{\partial x} \\ \frac{\partial s}{\partial y} \end{bmatrix} = \begin{bmatrix} s_x \\ s_y \end{bmatrix}$$

où S (x, y) est la matrice-image après floutage obtenue au terme de l'étape S1 de floutage.

Une deuxième dérivation (de la triple dérivation) opère un calcul de matrice Hessienne, lequel s'exprime sous la forme :

$$\mathrm{H}(x,y) = \begin{bmatrix} S_{xx} & S_{xy} \\ S_{yx} & S_{yy} \end{bmatrix}$$

où $S_{xx} = \frac{\partial^2 S(x,y)}{\partial x^2}$ ; $S_{xy} = \frac{\partial^2 S(x,y)}{\partial x \partial y}$ ; $S_{yx} = \frac{\partial^2 S(x,y)}{\partial y \partial x}$ ; et $S_{yy} = \frac{\partial^2 S(x,y)}{\partial y^2}$,

permettant de déterminer des variations locales de planéité :

$$\sigma(x,y) = S_{xx}^2 + S_{xy}^2$$

Puis une troisième dérivation (de la triple dérivation) opère une dérivation dite « de troisième ordre », en utilisant un opérateur définissant un taux de variation des variations locales de planéité précédemment déterminées, de nature à mettre en évidence des défauts, y compris de très petites dimensions en insérant les informations résultantes dans un module de détection de défauts éventuels lors d'une étape subséquente.

L'opérateur définissant un taux de variation des variations locales de planéité précédemment déterminées peut être exprimé par :

$$\nabla \sigma(x,y) = 2 \cdot \begin{bmatrix} S_{xx} \cdot S_{xxx} + S_{yy} \cdot S_{yyx} \\ S_{xx} \cdot S_{xxy} + S_{yy} \cdot S_{yyy} \end{bmatrix}$$

Enfin une détection d'un ou plusieurs éventuels défauts D présents dans la surface inspectée AS est réalisée en utilisant un module de détection de défauts. Selon un mode de réalisation, le module de détection de défaut est implémenté par l'unité de traitement 12. Selon un mode de réalisation, le module de détection de défaut est un réseau de neurones NN de type « YOLO » (sigle anglais de « You Only Look Once »). Il s'agit d'un module implémentant un algorithme connu dans le domaine de la vision par ordinateur (ou « computer vision ») et capable de détecter des objets prédéterminés dans une image en une seule scrutation (un seul « regard ») en opérant simultanément une détection et une classification. L'algorithme YOLO opère à partir de la matrice-image S issue des trois dérivations successives postérieures au floutage et fournit des informations permettant l'identification et la localisation des éventuels défauts de surface en présence via l'instanciation de boites englobantes assorties chacune d'une probabilité de présence d'un défaut dans la zone délimitée par la boite englobante de la matrice-image résultant des trois dérivations. Le ou les défauts D détectés dans la matrice-image S peuvent donc faire l'objet de traitements ultérieurs, indépendamment les uns des autres.

Bien évidemment, le mode de détection détaillé ci-avant est décrit à titre d'exemple de réalisation et d'autres modes de réalisation ou variantes peuvent être utilisés pour opérer une détection d'un ou plusieurs défauts de surface d'un objet, par exemple via d'autres procédés automatisés ou encore grâce à des informations obtenues via une interface utilisateur par un opérateur analysant un état de surface au moyen d'un outil spécifique de visualisation de cet état de surface.

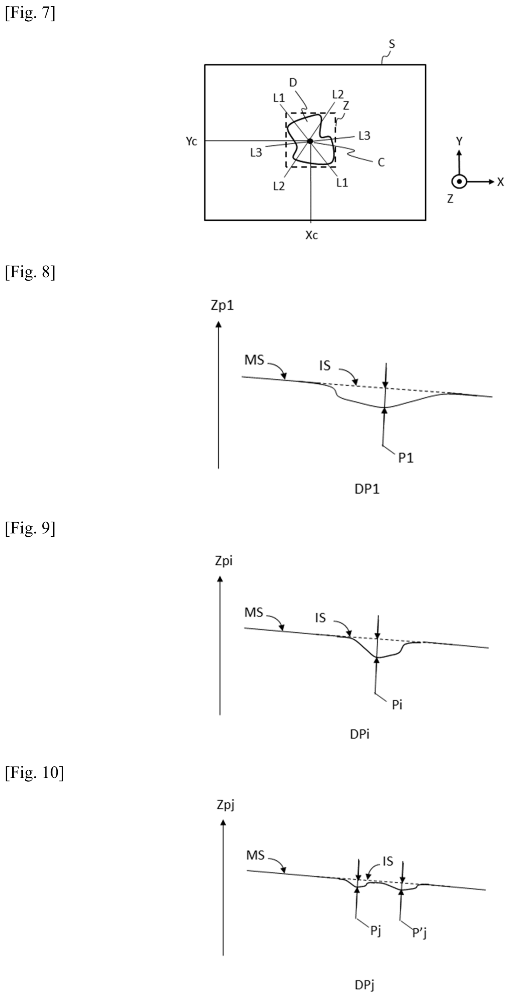

Lors d'une étape S2, le ou les défauts D détectés dans la surface AS, par traitement et analyse de la matrice-image S sont caractérisés pour en définir les dimensions dont notamment la profondeur de chacun des défauts D. A des fins de simplification de la présente description, il est considéré pour la suite de la description qu'un seul défaut D est détecté dans la matrice-image S et donc dans la surface ou portion de surface AS. Dans la réalité, plusieurs défauts pourraient être détectés dans une surface ou portions de surfaces AS. Les opérations propres à la caractérisation du défaut D de la surface AS sont décrites dans la suite de la description, en relation avec la Fig. 5 et les figures Fig. 7 à Fig. 10.

Une fois la profondeur du ou de chacun des défauts D déterminée avec précision, il est possible de notifier, via le système 1 ou via un dispositif tiers, la présence du ou des défauts détectés, lors d'une étape **S3.** Selon un mode de réalisation, une telle notification est opérée lorsque la valeur absolue de la profondeur du défaut détecté dépasse une valeur seuil prédéfinie. Il est considéré ici que la valeur d'une profondeur peut décrire un défaut de type enfoncement ou relief dans la surface AS inspectée et analysée. Ainsi, une valeur négative de profondeur signale la présence d'un relief. Une notification de la présence ou de l'importance d'un défaut permet avantageusement de contrôler ou d'organiser des modifications de processus de fabrication et/ou des opérations de maintenance en relation avec la surface ou portion de surface AS.

La **Fig. 5** illustre des détails d'opérations réalisées dans l'étape S2 précitée en relation avec un défaut D détecté dans la surface AS et dont il convient de déterminer la profondeur avec une grande précision. Ainsi, l'étape S2 est un séquencement de sous-étapes **S20, S21** et **S22** visant successivement et respectivement à déterminer un centre du défaut D détecté (étape S20) puis à déterminer une pluralité de profils Pi de profondeur dans une zone de défaut Z contenant le défaut D, telle que par exemple, une boite englobante Z instanciée par ses coordonnées dans la matrice-image S (étape S21) ou une zone Z plus étendue comprenant la zone délimitée par une boite englobante issue d'un procédé de détection de défaut, puis à déterminer une profondeur P dite « finale » du défaut D, à partir de profondeurs Pi déterminées pour chacun des profils de profondeurs (étape S22).

Plus précisément, lors de l'étape **S20,** une méthode spécifique déjà connue est appliquée à la zone Z pour en déterminer le point le plus bas ou le plus haut de la matrice image S dans la zone Z, lequel point est appelé ici « centre » du défaut considéré. Selon un mode de réalisation, la zone Z utilisée s'étend au-delà d'une boite englobante comprenant un défaut D à analyser, de sorte à pouvoir considérer l'état de la surface autour du défaut D en vue de traitements ultérieurs (par exemple un traitement tel qu'une interpolation numérique d'un profil de surface endommagé par un défaut).

Selon un mode de réalisation particulier, la méthode utilisée pour ce faire est un algorithme de descente de gradient, encore appelé usuellement l'algorithme du gradient, et qui permet de minimiser une fonction réelle différentiable définie dans un espace euclidien. L'algorithme de descente de gradient est alors appliqué à la surface instanciée numériquement S. Il s'agit d'un algorithme itératif qui procède par améliorations successives. Selon l'algorithme, au point courant, un déplacement est opéré dans une direction opposée au gradient, de manière à faire décroitre la fonction. Le même principe est appliqué pour rechercher un point le plus haut d'un défaut, en minimisant l'opposé de la fonction. Ces opérations permettent de déterminer un centre C de coordonnées Xc, Yc du défaut D dans la matrice-image S.

Cet exemple de réalisation n'est pas limitatif et d'autres modes de réalisation peuvent être utilisés pour déterminer le centre C d'un défaut. Par exemple, une évaluation peut être réalisée par un opérateur travaillant sur une vue agrandie d'une zone de défaut, lequel l'opérateur désigne alors, via un outil numérique opérant sur la surface instanciée numériquement, le centre C d'un défaut considéré.

Il est alors possible de déterminer une pluralité de trajectoires rectilignes (droites) passant par le centre C du défaut D suivant lesquelles des profils de profondeurs DPi sont déterminés à l'étape **S21.** Pour comprendre comment sont déterminés ces profils de profondeurs DPi, la **Fig.** 7 illustre une pluralité de droites L1, L2 et L3 utilisées pour déterminer des profils de profondeur DP1, DP2 et DP3 permettant de déterminer quelle est la variation locale de la profondeur du défaut D lors d'un parcours de chacune des droites L1, L2 et L3 dans la zone Z détourant le défaut D. Les droites L1, L2 et L3 passent par le centre C. Ici, le nombre de droites Li, et donc le nombre de profils de profondeur DPi est volontairement restreint à des fins de simplification de l'illustration. Mais selon un mode de réalisation particulier, de nombreux profils de profondeur DPi sont déterminés, par exemple plusieurs dizaines. Selon un mode de réalisation particulier et non limitatif, soixante profils de profondeurs sont déterminés suivant soixante droites passant par le centre C et orientées de sorte à présenter chacune un angle de 3° par rapport aux droites qui lui sont voisines. Il est donc possible de déterminer des distances (ou profondeurs, ou altitudes) Zp1 (absolues ou relatives) pour chacun des points de la droite L1 dans la zone Z de la matrice-image S. De façon similaire, il est possible de déterminer des distances (ou profondeurs, ou altitudes) Zp2 pour chacun des points de la droite L2 dans la zone Z de la matrice-image S et il est possible de déterminer des distances

EP 4 733 714 A1

(ou profondeurs, ou altitudes) Zp3 pour chacun des points de la droite L3 dans la zone Z de la matrice-image S. Ces suites de valeurs constituent ici respectivement des profils DP1, DP2 et DP3 respectivement en référence aux droites L1, L2 et L3. Le profil DP1 est une suite de valeurs Zp1 de profondeurs suivant la droite L1, le profil DP2 est une suite de valeurs Zp2 de profondeurs suivant la droite L2, et ainsi de suite. Plus généralement, il est possible de déterminer un profil DPi constituant une suite de valeur Zpi suivant une ième droite Li traversant la zone Z en passant par le centre C.

La **Fig. 8** illustre un exemple de profil de profondeur DP1 suivant la droite L1 et la **Fig. 9** illustre plus généralement un exemple de profil de profondeur DPi suivant une droite Li. Chacun des profils présente une suite MS de valeurs mesurées (et donc de valeurs de la matrice-image S), appelée ici portion de profil MS ainsi qu'une suite de valeurs obtenues par interpolation de ces valeurs, appelée ici portion de profil interpolée IS. Ainsi, la portion de profil interpolée d'un profil présume de ce que serait ce profil de profondeur déterminé en l'absence de défaut de surface. L'écart maximal de profondeur entre la portion MS et la portion IS, dans la direction de la normale, est la profondeur du profil considéré.

Ainsi, sur la **Fig. 7**, P1 est la profondeur du défaut D suivant (ou selon) le profil DP1 et sur la **Fig. 9,** Pi est la profondeur du défaut D suivant (ou selon) le profil DPi. Il est à noter en outre qu'un profil de profondeur peut présenter plusieurs variations successives de pente (changement de signe de la dérivée) indiquant la présence d'un relief particulier. Un exemple de profil de profondeur DPj illustre sur la Fig. 10 deux cavités voisines de profondeur respectives Pj et P'j selon un profil déterminé suivant une droite Lj. Un tel profil DPj peut provenir de la forme singulière d'un défaut ou encore de la présence d'un élément quelconque à proximité de ce défaut.

De retour à l'étape S21 en rapport avec la Fig. 5, et dès lors que les profils DP1, DP2 et DP3 ont été déterminés, les profondeurs respectives P1, P2 et P3 de ces profils sont déterminées par analyse numérique de sorte qu'à l'étape **S22** une valeur « finale » P de profondeur du défaut D puisse être déterminée à partir de toutes les profondeurs des profils DP1, DP2 et DP3.

Selon un mode de réalisation, un calcul de médiane pondérée est utilisé pour déterminer la profondeur dite « finale » P du défaut D à partir des profondeurs respectives P1, P2 et P3 des profils DP1, DP2 et DP3.

Selon un mode de réalisation, des pondérations peuvent être introduites sous la forme d'indices de confiance k attribués aux différents profils de profondeurs déterminés. Par exemple, lorsqu'un profil de profondeur présente des variations de nature à présumer de la présence de deux défauts très proches, ou encore d'un objet ou élément (par exemple un rivet) au voisinage direct d'un défaut, tel que cela est illustré en relation avec la Fig. 10, un facteur de pondération ou indice de confiance k minoré (par exemple k = 0,05 ) est attribué au profil de profondeur concerné (et donc à la valeur de profondeur déterminée en relation avec ce profil) de sorte à minorer son poids dans le calcul de médiane pondérée. En l'absence d'une telle particularité dans un profil considéré, une valeur nominale est attribuée à l'indice de confiance k associé au profil (par exemple k=1).

Une fois la profondeur P du défaut D déterminée, les traitements subséquents, éventuellement conditionnels de l'étape S3 sont réalisés.

Selon un mode de réalisation, lorsqu'un algorithme itératif de descente de gradient est utilisé à l'étape S20 pour déterminer quel est le centre C d'un défaut D à analyser, c'est-à-dire le point le plus bas ou le point le plus haut de la surface d'un défaut de surface d'un objet, les étapes S21 et S22, respectivement de détermination d'une pluralité de profils de profondeur du défaut et de détermination d'une profondeur maximale et d'un indice de confiance pour chacun des profils de profondeur déterminés, puis, de détermination de la profondeur du défaut de surface à partir des profondeurs maximales déterminées et des indices de confiance déterminés en référence à chacun des profils de profondeur, sont réalisées pour chacune des itérations de l'algorithme itératif de descente de gradient.

Selon un autre mode de réalisation, le centre C d'un défaut D à analyser est initialement déterminé à l'étape S20 comme étant le centre d'une boite englobante délimitant une zone comprenant le défaut D au terme d'un procédé de détection, puis des séquences d'étapes S21 et S22 sont réitérées successivement en déterminant, pour chaque nouvelle itération, un centre C corrigé à partir du point déterminé comme étant le plus bas ou le plus haut au terme de l'itération précédente d'un séquencement d'étapes S21 et S22, et ce jusqu'à obtention d'une valeur maximale de profondeur ou de relief.

Avantageusement et astucieusement, l'utilisation d'une pluralité de profils de profondeur, selon des trajectoires rectilignes orientées chacune différemment dans la zone d'un défaut, permet d'identifier et de distinguer des orientations de profils de profondeurs selon lesquelles un unique défaut (creux ou bosse) apparait dans le profil au regard d'autres orientations de profil de profondeur selon lesquelles plusieurs variations de surface (creux ou bosses) apparaissent dans le profil. Une telle distinction permet avantageusement de considérer ces deux types de profils de façons différentes (par exemple en établissant des pondérations) et de s'affranchir *in fine* de perturbations dans une mesure de profondeur (ou de relief), en provenance d'éléments normalement en présence au voisinage d'un défaut analysé (par exemple un rivet, une jonction entre deux éléments de surface voisins, etc.).

La **Fig. 6** illustre schématiquement un exemple d'architecture interne de l'unité de traitement 12 du système 1 d'inspection automatisée, configurée pour exécuter le procédé précédemment décrit.

Selon l'exemple d'architecture matérielle représenté à la Fig. 6, l'unité de traitement 12 comprend alors, reliés par un bus de communication 129 : un processeur ou CPU (« Central Processing Unit » en anglais) 121 ; une mémoire vive RAM (« Random Access Memory » en anglais) 122 ; une mémoire morte ROM (« Read Only Memory » en anglais) 123 ; une unité de stockage telle qu'un disque dur (ou un lecteur de support de stockage, tel qu'un lecteur de cartes SD (« Secure Digital » en anglais) 124 ; un module d'interfaces de communication 125 permettant à l'unité de traitement 12 de communiquer avec des dispositifs distants tels qu'un dispositif d'inspection de surface ou encore des dispositifs de sites de fabrication ou de maintenance.

Le processeur 121 de l'unité de traitement 12 est capable d'exécuter des instructions chargées dans la RAM 122 à partir de la ROM 123, d'une mémoire externe (non représentée), d'un support de stockage (tel qu'une carte SD), ou d'un réseau de communication. Lorsque l'unité de traitement 12 est mise sous tension, le processeur 121 est capable de lire de la RAM 122 des instructions et de les exécuter. Ces instructions forment un programme d'ordinateur causant la mise en œuvre, par le processeur 121 de l'unité de traitement 12, de tout ou partie d'un procédé d'inspection automatisée tel que précédemment décrit.

Tout ou partie d'un tel procédé d'inspection automatisée de surfaces, par exemple de surfaces d'aéronef, peut alors être implémenté sous forme logicielle par exécution d'un ensemble d'instructions par une machine programmable, par exemple un DSP (« Digital Signal Processor » en anglais) ou un microcontrôleur, ou être implémenté sous forme matérielle par une machine ou un composant dédié, par exemple un FPGA (« Field-Programmable Gate Array » en anglais) ou un ASIC (« Application-Specific Integrated Circuit » en anglais). En général, l'unité de traitement 12 comprend de la circuiterie électronique configurée pour mettre en œuvre un procédé d'inspection automatisée de surfaces d'objets solides. Bien évidemment, l'unité de traitement 12 comprend en outre tous les éléments usuellement présents dans un système comprenant une unité de contrôle et ses périphériques, tels que, un circuit d'alimentation, un circuit de supervision d'alimentation, un ou plusieurs circuits d'horloge, un circuit de remise à zéro, des ports d'entrées-sorties, des entrées d'interruptions, des drivers de bus, cette liste étant non exhaustive.

## Revendications

1. Procédé de détermination d'une profondeur (P) d'un défaut (D) de surface (AS) d'un objet (100), ladite surface étant instanciée numériquement sous la forme d'une carte de distances (S) entre une surface réelle (AS) mesurée dudit objet et un capteur d'un système d'inspection (10) de surfaces configuré pour obtenir ladite surface instanciée numériquement (S) par une opération de scrutation de ladite surface réelle (AS), ledit procédé comprenant une détection dudit défaut (D) dans ladite surface (S), par délimitation d'une portion dite « zone de défaut » (Z) de ladite surface instanciée numériquement (S), ledit procédé étant **caractérisé en ce qu'**il comprend en outre :

   - (i) une détermination (S1) d'un centre (C) dudit défaut (D),
   - (ii) une détermination (S2) d'une pluralité de profils de profondeur (DPi) du défaut (D), chacun desdits profils de profondeur étant respectivement établi suivant un parcours de ladite zone (Z) de défaut de la surface instanciée numériquement selon une trajectoire rectiligne (Li) prédéterminée passant par ledit centre (C), chacun desdits profils de profondeur (DPi) étant en outre déterminé en référence à une trajectoire différente de la trajectoire déterminée pour les autres profils parmi ladite pluralité de profils,
   - (iii) une détermination (S3) d'une profondeur maximale (Pi) et d'un indice de confiance (k) pour chacun desdits profils (DPi) de profondeur déterminés, puis,
   - (iv) une détermination de ladite profondeur (P) dudit défaut (D) de surface à partir desdites profondeurs maximales (Pi) déterminées et desdits indices de confiance (k) déterminés en référence à chacun desdits profils (DPi) de profondeur.

2. Procédé selon la revendication 1, selon lequel une détermination de ladite profondeur maximale d'un profil de profondeur comprend une opération d'interpolation dans ledit profil de profondeur.

3. Procédé selon l'une des revendications 1 et 2, selon lequel ladite détermination de ladite profondeur dudit défaut de surface à partir desdites profondeurs maximales déterminées chacune en référence à un profil comprend un calcul de médiane pondérée.

4. Procédé selon l'une des revendications 1 à 3, comprenant en outre une étape de notification de la présence dudit défaut détecté dans ladite surface.

5. Procédé de fabrication d'un élément d'aéronef comprenant un procédé de détermination de la profondeur d'un défaut selon l'une des revendications 1 à 4, et une étape de modification de ladite surface à partir d'au moins une information représentative dudit défaut.

**6.** Système de détermination d'une profondeur d'un défaut de surface d'un objet, ladite surface étant instanciée numériquement sous la forme d'une carte de distances entre une surface réelle mesurée dudit objet et un capteur d'un système d'inspection de surfaces configuré pour obtenir ladite surface instanciée numériquement par une opération de scrutation de ladite surface réelle, ledit système comprenant une circuiterie électronique configurée pour opérer une détection dudit défaut dans ladite surface, par délimitation d'une portion dite « zone de défaut » de ladite surface instanciée numériquement, ledit système étant **caractérisé en ce qu'**il comprend en outre une circuiterie électronique configurée pour opérer :

    - (i) une détermination d'un centre dudit défaut par application d'un algorithme de descente de gradient à ladite zone de défaut de ladite surface instanciée numériquement,
    - (ii) une détermination d'une pluralité de profils de profondeur du défaut, chacun desdits profils de profondeur étant respectivement établi suivant un parcours de ladite zone de défaut de la surface instanciée numériquement selon une trajectoire rectiligne prédéterminée passant par ledit centre, chacun desdits profils de profondeur étant en outre déterminé en référence à une trajectoire différente de la trajectoire déterminée pour les autres profils parmi ladite pluralité de profils,
    - (iii) une détermination d'une profondeur maximale et d'un indice de confiance pour chacun desdits profils de profondeur déterminés, puis,
    - (iv) une détermination de ladite profondeur dudit défaut de surface à partir desdites profondeurs maximales déterminées et desdits indices de confiance déterminés en référence à chacun desdits profils de profondeur.

**7.** Système selon la revendication 6, le système comprenant en outre une circuiterie électronique configurée pour opérer une détermination d'une profondeur maximale d'un profil de profondeur prédéterminé comprenant une opération d'interpolation dans un profil de profondeur déterminé.

**8.** Système selon l'une des revendications 6 et 7, le système comprenant en outre une circuiterie électronique configurée pour réaliser une détermination de ladite profondeur dudit défaut de surface à partir desdites profondeurs maximales déterminées chacune en référence à un profil, ladite détermination de ladite profondeur dudit défaut de surface comprenant un calcul de médiane pondérée.

**9.** Système selon l'une des revendications 6 à 8, comprenant en outre une circuiterie électronique configurée pour opérer une notification de la présence dudit défaut détecté dans ladite surface.

**10.** Produit programme d'ordinateur comprenant des instructions de codes de programme pour exécuter des étapes d'un procédé selon l'une des revendications 1 à 5 lorsque lesdites instructions sont exécutées par un processeur d'un système de détermination d'une profondeur d'un défaut de surface d'un objet solide.

**11.** Dispositif de stockage comprenant un produit programme d'ordinateur selon la revendication 10.

[Fig. 1]

[Fig. 2]

[Fig. 3]

[Fig. 4]

```
                    ┌──────────┐  S0
                    │   init.  │
                    └──────────┘
                         │
                         ▼
         ┌────────────────────────────────┐ S1
         │      détection d'un défaut      │
         └────────────────────────────────┘
                         │
                         ▼
         ┌────────────────────────────────┐ S2
         │  détermination de la profondeur │
         │           du défaut             │
         └────────────────────────────────┘
                         │
                         ▼
         ┌────────────────────────────────┐ S3
         │  notification du défaut caractérisé │
         │           (profondeur)          │
         └────────────────────────────────┘
```

[Fig. 5]

```
              ┌────────────────────────┐ S20
              │    détermination d'un   │
              │   centre C du défaut D  │
              └────────────────────────┘
                         │
                         ▼
   S2     ┌────────────────────────────────┐ S21
          │    détermination de profils DPi │
          │   et de profondeurs Pi des profils │
          └────────────────────────────────┘
                         │
                         ▼
          ┌────────────────────────────────┐ S22
          │  détermination de la profondeur P │
          │           du défaut D           │
          └────────────────────────────────┘
```

[Fig. 6]

```
                              12
   ┌──────────────────────────────────────────┐
   │     121         122          123          │
   │  ┌──────┐    ┌──────┐    ┌──────┐         │
   │  │ PROC │    │ RAM  │    │ ROM  │         │
   │  └──────┘    └──────┘    └──────┘  129    │
   │     │           │           │             │
   │  ───┴───────────┼───────────┴──────────   │
   │           │          │                    │
   │          124        125                   │
   │      ┌──────┐    ┌──────┐                 │
   │      │ STCK │    │ INTER│                 │
   │      └──────┘    └──────┘                 │
   └──────────────────────────────────────────┘
```

[Fig. 7]

[Fig. 8]

[Fig. 9]

[Fig. 10]

Europäisches
Patentamt

European
Patent Office

Office européen
des brevets

## RAPPORT DE RECHERCHE EUROPEENNE

Numéro de la demande

EP 25 21 0280

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | DATABASE COMPENDEX [Online]<br>ENGINEERING INFORMATION, INC., NEW YORK, NY, US;<br>1 décembre 2017 (2017-12-01),<br>JOVANCEVIC I [0000-0002-7627-0205] ET AL:<br>"3D Point Cloud Analysis for Detection and Characterization of Defects on Airplane Exterior Surface",<br>XP002813328,<br>Database accession no. E20174304312737<br>* abrégé * | 1-11 | INV.<br>G01B11/22<br>G01B11/24<br>G01N21/88<br>G06T7/62 |
| A | & JOVANCEVIC I [0000-0002-7627-0205] ET AL: "3D Point Cloud Analysis for Detection and Characterization of Defects on Airplane Exterior Surface",<br>JOURNAL OF NONDESTRUCTIVE EVALUATION 20171201 SPRINGER NEW YORK LLC USA,<br>vol. 36, no. 4,<br>1 décembre 2017 (2017-12-01),<br>DOI: 10.1007/S10921-017-0453-1<br>* abrégé *<br>* 3 Methodology for Defect Detection and Characterization;<br>pages 3-11 * | 1-11 | |
| | ----- | | **DOMAINES TECHNIQUES RECHERCHES (IPC)**<br>G01B<br>G06T<br>G01N |
| A | US 2013/297232 A1 (EULER HELMUTH [DE] ET AL) 7 novembre 2013 (2013-11-07)<br>* alinéas [0035], [0037]; figures 1,3 *<br>----- | 1-11 | |

Le présent rapport a été établi pour toutes les revendications

| Lieu de la recherche | Date d'achèvement de la recherche | Examinateur |
|---|---|---|
| Munich | 2 mars 2026 | Trique, Michael |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

 .......................................................................................

& : membre de la même famille, document correspondant

EPO FORM 1503 03.82 (P04C02)

**EP 4 733 714 A1**

## ANNEXE AU RAPPORT DE RECHERCHE EUROPEENNE
## RELATIF A LA DEMANDE DE BREVET EUROPEEN NO.

EP 25 21 0280

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

02-03-2026

| Document brevet cité au rapport de recherche | Date de publication | Membre(s) de la famille de brevet(s) | Date de publication |
|---|---|---|---|
| US 2013297232 A1 | 07-11-2013 | CA 2825678 A1 | 02-08-2012 |
| | | CN 103328957 A | 25-09-2013 |
| | | DE 102011003209 A1 | 26-07-2012 |
| | | EP 2633291 A1 | 04-09-2013 |
| | | JP 2014503826 A | 13-02-2014 |
| | | KR 20130118379 A | 29-10-2013 |
| | | KR 20150038693 A | 08-04-2015 |
| | | US 2013297232 A1 | 07-11-2013 |
| | | WO 2012100999 A1 | 02-08-2012 |

EPO FORM P0460